Europäisches Patentamt

**European Patent Office**

Office européen des brevets

(11) Publication number: **0 190 830**
**A2**

## (12) EUROPEAN PATENT APPLICATION

(21) Application number: **86300264.8**

(22) Date of filing: **16.01.86**

(51) Int. Cl.⁴: **G 01 N 21/64**
**G 01 N 21/77**

(30) Priority: **04.02.85 US 698282**

(43) Date of publication of application:
**13.08.86 Bulletin 86/33**

(84) Designated Contracting States:
**BE DE FR GB IT NL**

(71) Applicant: **GOULD INC.**
**10 Gould Center**
**Rolling Meadows, IL 60008(US)**

(72) Inventor: **Murray, Richard C., Jr.**
**648 E. Stark Drive**
**Palatine Illinois 60067(US)**

(72) Inventor: **Lefkowitz, Steven M.**
**700 Salem Drive, Apt. 105**
**Hoffman Estates Illinois 60194(US)**

(74) Representative: **Barrett, James William et al,**
**A.A. THORNTON & CO. Northumberland House 303-306**
**High Holborn**
**London WC1V 7LE(GB)**

(54) **Single optical fiber sensor for measuring the partial pressure of oxygen.**

(57) A device is described for sensing oxygen, particularly for use in medical applications. The device includes a plastic optical waveguide having a cladding and a core. A portion of the core is exposed, plasticized, and a fluorescent, oxygen-sensitive dye is integrated in the exposed core. The oxygen-sensitive dye fluoresces in response to light from a light source such that the intensity of fluorescence is dependent on the partial pressure of oxygen in the environment.

EP 0 190 830 A2

Croydon Printing Company Ltd.

0190830
D-1463

## BACKGROUND OF THE INVENTION

The invention relates generally to sensors for monitoring the partial pressure of oxygen in various environments and more specifically relates to fiber-optic devices for monitoring the partial pressure of oxygen in medical applications.

Various amperometric electrochemical methods exist for measuring the partial pressure of oxygen. However, these methods are generally unsatisfactory for in vivo applications due to severe and unpredictable drift related to difficulties associated with the fabrication of microsensors and with membrane contamination. As used in this context, membrane contamination refers to clogging or fouling of the membrane and is highly undesirable because it can cause such devices to produce incorrect readings for the partial pressure of oxygen.

An alternative to the use of electrochemical sensors for in vivo applications is the use of optically based oxygen sensors. Several oxygen-based sensor systems have been described previously. For example, U.S. Patent No. 4,003,707 issued January 18, 1977, to Lubbers describes the idea of using quenching by oxygen of the fluorescence of pyrene dibutyric acid dissolved in dimethyl formamide with the solution enclosed in a gas-permeable membrane.

One problem, however, with the device described in the patent to Lubbers is that such devices are difficult to fabricate as miniature devices for use in medical applications.

Another optical device is described in Peterson, Analyt. Chem., 56, 62-67 (1984). Peterson describes the use of a two-fiber optical cable having a sensing tip consisting of perylene dibutyrate absorbed on a powdered polystyrene support and enclosed in a gas permeable membrane. The dye is excited by light sent down one of the fibers. The resulting fluorescence is detected with the other fiber. Quenching of the fluorescence of perylene dibutyrate by oxygen is again used in this method.

Another general type of optical device for monitoring the partial pressure of oxygen can be based on the use of ruthenium (II) complexes as luminescent sensors. The properties of such complexes are described in Klassen et al., "Spectroscopic Studes of Ruthenium (II) Complexes. Assignment of the Luminescence", The Journal of Chemical Physics, Vol. 48, No. 4, (1968), Pages 1853-1858, and in Demas et al., "Energy Transfer from Luminescent Transition Metal Complexes to Oxygen", Journal of the American Chemical Society, Vol. 99, No. 11, (1977), Pages 3547-3551.

The use of perylene dibutyrate or pyrene dibutyric acid mounted on a solid support, or in solution, and enclosed in a membrane is unsatisfactory because of the complexity of fabrication and the poor sensitivity of the dyes. The luminescence of these dyes change substantially less than twofold when the partial pressure of oxygen changes from 0 to 760 mm. Hg. These changes have been measured and found to be only approximately ten percent or less. The ruthenium complex is much more sensitive than the other two materials, but is very slow to respond when used in

0190830

unplasticized polyvinyl chloride (PVC) or silicone rubber systems described by Demas and Bacon.

U.S. Patent Nos. 4,399,099 and 4,321,057 to Buckles describes an oxygen sensor made by coating an optical fiber core with a cladding material which interacts with oxygen thereby changing the amount of transmitted light. His method requires that both ends of the fiber be accessible so that effectively two fibers (i.e., two fiber ends) are required for a given sensor if used in a catheter application.

The use of two fibers and/or a remote light source appears to be a requirement for most optical sensing devices for monitoring the partial pressure of oxygen. This makes the use of such devices impractical in remote sensing applications where only a single fiber is available, and where that single fiber must serve as both an excitation source and a signal conduit, particularly where space constraints exist.

Therefore, a need exists to provide a miniaturized sensing system, for monitoring the partial pressure of oxygen, which is easily fabricated, is sufficiently responsive to small changes in the partial pressure of oxygen, can be operated using a single optical fiber in remote applications, and is not subject to the effects of membrane contamination such as deterioration of the accuracy of the sensor.

## SUMMARY OF THE INVENTION

The subject invention is a very fast, very sensitive, single-fiber oxygen sensor designed for remote applications in constricted environments.

The sensor described herein is particularly useful in multisensor systems for very small channels such as in arteries and in blood vessels, or in single-lumen medical catheters. The invention includes an optical waveguide to receive light transmitted from a light source. The invention also includes an oxygen-sensing medium disposed in a portion of the core of the waveguide. The sensing medium fluoresces in response to light from the light source. The intensity of fluorescence of the sensing medium is dependent upon the partial pressure of oxygen present in the environment to be monitored. In the preferred embodiment, the portion of the core of the waveguide in which the oxygen-sensing medium is disposed is plasticized to stabilize the increased sensitivity and response rate of the sensor.

An object of the invention is to provide a miniaturized oxygen sensor for medical applications.

Another object of the invention is to provide an oxygen sensor which is capable of responding to very small changes in the partial pressure of oxygen on the order of 1 to 5 mm Hg.

Another object of the invention is to provide an oxygen sensor which is easily fabricated and maintains its integrity during continued use.

Yet another object of the invention is to provide an oxygen sensor which is not susceptible to the effects of membrane contamination when used in medical applications.

These and other objects and advantages of the invention, as well as the details of an illustrative embodiment, will be more fully understood from the following description and the drawings.

## BRIEF DESCRIPTION OF THE DRAWINGS

FIG. 1 is a schematic cross-sectional view illustrating one embodiment of the subject invention;

FIG. 2 is a schematic cross-sectional view illustrating the subject invention particularly describing the light transmitting and fluorescent characteristics of the subject invention;

FIG. 3 is a Stern-Volmer plot showing the relative fluorescent intensity of light produced in a prior-art sensor and a sensor as described herein as a function of the partial pressure of oxygen; and

FIG. 4 is a graph illustrating the response times of a traditional sensor of silicone rubber and a sensor of the techniques described herein.

## DETAILED DESCRIPTION OF THE PREFERRED EMBODIMENT

As noted above, the subject invention is a very fast, very sensitive single-fiber sensor designed for remote applications in constricted environments. The sensor is very easy to construct and can be used either for gas, or liquid-phase monitoring. The subject invention comprehends that numerous embodiments can be used with regard to both the materials used and the geometric design of the sensor.

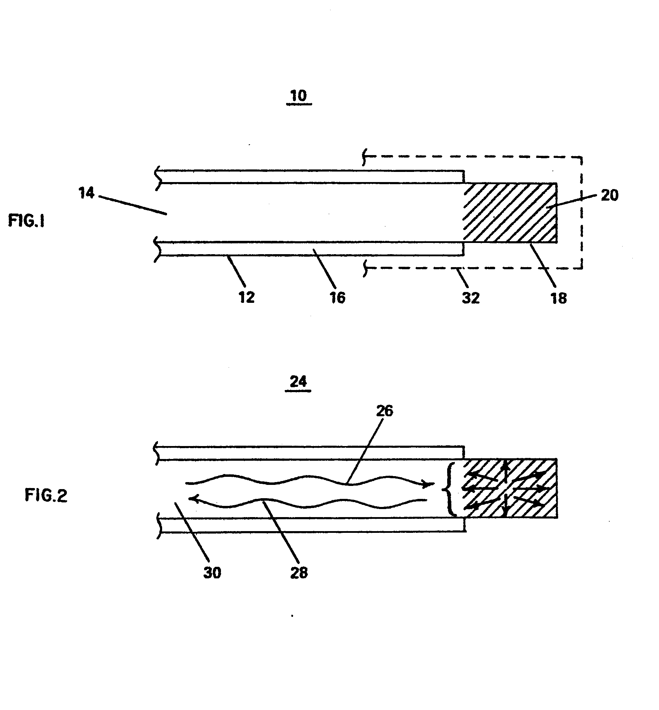

FIG. 1 illustrates an embodiment of the subject invention. As can be seen from the figure, a sensing device 10 for sensing oxygen includes a plastic waveguide 12 having a core 14 and a cladding 16. The cladding 16 surrounds a first portion of the core 14. The cladding is removed from a second portion of the core 18 to expose the core. An oxygen-sensing medium 20 is incorporated into the core using the procedure described in further detail below.

The subject invention comprehends that the oxygen-sensing medium includes a fluorescent dye which can be quenched in proportion to the partial pressure of oxygen present in an environment to be monitored. Various materials may be used for the dye as will be discussed in further detail below. A key feature of the subject invention is that the core of the waveguide in which the sensing medium is dispersed is plasticized to improve the performance and increase the stability of the device.

FIG. 2 illustrates the light transmission characteristics and fluorescent characteristics of a typical sensor 24 fabricated in accordance with the subject invention. As can be seen from the figure, excitation light 26 and a fluorescent signal 28 both travel along the same optical fiber 30 so that extreme miniaturization or multiple sensors in a single small channel are possible. Experimental results, which will be discussed in further detail below indicate that a sensor fabricated in accordance with the subject invention has at least twice the sensitivity of any of the sensors described above in the Background of the Invention where sensitivity (S) is defined by the equation:

$$S = (I_0/I_{760} - 1)$$

where $I_0$ is the intensity of the fluorescent light at 0 mm Hg, and $I_{760}$ is the intensity of fluorescent light at 760 mm Hg. In addition, the subject invention has a much faster response time as will be discussed below. Another advantage of the subject invention over the prior art is that devices fabricated in accordance with the preferred embodiment provide a much larger absolute fluorescent signal than prior-art devices, thereby increasing the attainable precision.

In the preferred embodiment, a sensor is fabricated using a 250 micron diameter plastic optical fiber having first and second ends. The fiber has a polyacrylic core and a fluorinated acrylic cladding in the preferred embodiment. The cladding is removed by dipping the first end of the fiber into an appropriate solvent which will dissolve the cladding without affecting the core. In the preferred embodiment, ethyl acetate was used as the solvent. It typically required between 30 and 120 seconds to completely remove the cladding.

The second end of the fiber is adapted to receive light from a light source and to provide an outlet for fluoresced light to go to a signal detector. In the preferred embodiment, the second end of the fiber is provided with a plastic optical connector ferrule. The area surrounding the second fiber end on the ferrule surface should be blackened so as not to reflect light from the excitation light source into the signal detector.

After the cladding has been removed from the first end of the fiber as described above, the first end of the fiber is then dipped into a solution consisting of a plasticizer, a dye, and a solvent for the dye and plasticizer which will also soften the core of the fiber. The purpose of using a solvent to soften the core is to allow the plasticizer and the dye to migrate more easily into the core of the fiber. During the migration process, the core of the fiber actually expands or swells. After the solvent evaporates, this swelling reduced but is still observable.

In the preferred embodiment, the first end of the fiber is dipped into a solution consisting of tris (4,7-diphenyl-1,10-phenanthroline) Ru(II) perchlorate and a plasticizer (usually di-isobutyl phthalate) dissolved in methylene chloride (or any other solvent for the material of the core of the fiber and the plasticizer used). A typical composition used was $10^{-4}$ mole of tris (4,7-diphenyl-1,10-phenanthroline) Ru(II) perchlorate, liter of di-isobutyl phthalate, and 1 liter of methylene chloride solvent. The plasticizer is necessary to produce the fast response and, to some extent, the high sensitivity. The phthalate class plasticizers (di-isobutyl-, dicyclohexyl-, tridecyl-, for example) seems to perform best.

In other embodiments, the plasticizer may be selected from a group of materials consisting of phthalic-acid derivatives, benzoic-acid derivatives, adipic-acid derivatives, sebacic-acid derivatives, paraffins.

It is necessary that the plasticizer used be compatible with the material used in the core of the fiber in a particular embodiment. A plasticizer which is compatible with the core material will leave the core uniformly translucent after the solvent evaporates, whereas a plasticizer which is not compatible with the core material will leave the core grainy and generally opaque.

As noted above, the preferred embodiment uses an oxygen sensitive fluorescent dye of tris (4,7-diphenyl-1,10-phenanthroline) Ru(II) perchlorate. In other embodiments, the oxygen-sensitive dye may be made of any salt of the tris (4,7-diphenyl-1,10-phenanthroline) Ru(II) cation. In particular, the anion used can be taken from the group including thiocyanate, hexafluorophosphate, tetrafluoroborate, chloride or any of the other halides. In other embodiments, the oxygen-sensitive fluorescent dye is made of any salt of a transition-metal complex having as a ligand a derivative of 1,10-phenanthroline. In particular, the transition-metal cation should be taken from the group including ruthenium (II), osmium (II), rhodium (III), and iridium (III). In addition, the dye can be a derivative of pyrene or perylene.

In some embodiments it is desirable to provide a gas-permeable, solution-impermeable sleeve about the optical fiber or waveguide. This is illustrated in phantom in FIG. 1 as element 32. In some embodiments the sleeve may be formed of polyethylene, polypropylene, or silicone rubber microbore tubing. The sleeve may be applied to the sensing device 10 by sliding a tube of the particular material used over the sensing device.

In other embodiments, it is possible to apply the sleeve by coating the device with the material to be used and allowing the material to cure in place about the device.

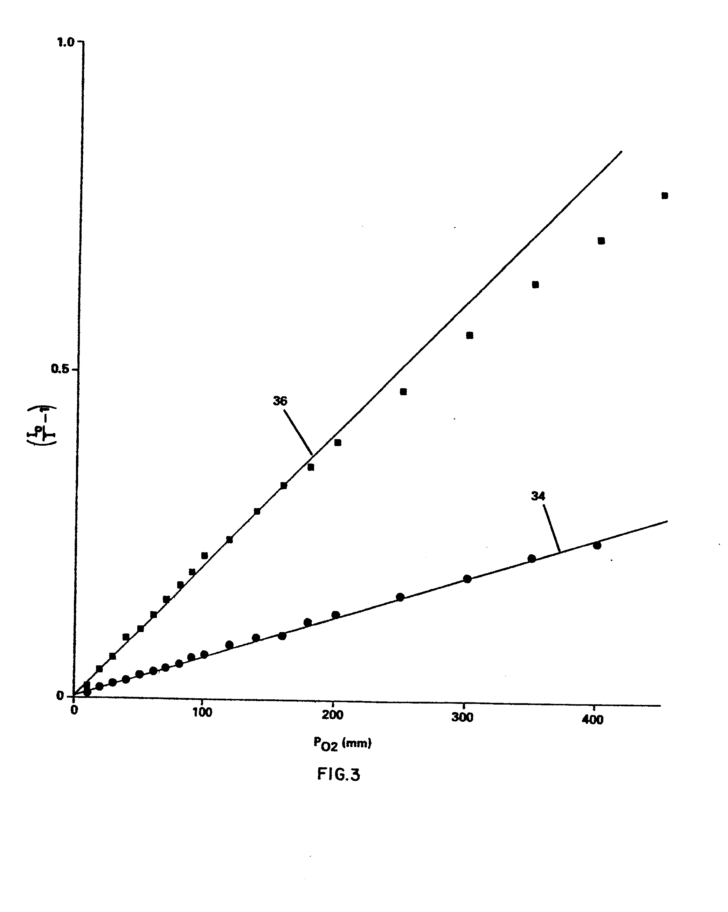

FIG. 3 illustrates a Stern-Volmer plot showing the relative fluorescent intensity of light produced in a prior-art sensor 34 and a sensor as described herein 36 as a function of the partial pressure of oxygen. A Stern-Volmer plot is a graph in which the fluorescence ratio of the sensor is plotted versus the percentage or partial pressure of oxygen. The fluorescence ratio (R) can be defined as:

$$R = (I_0/I_f - 1)$$

where $I_f$ is the fluorescence at a corresponding partial pressure of oxygen. As can be seen from the figure, the sensitivity of the device described herein is substantially greater than that of the prior-art sensor. The particular prior-art sensor that is used for comparison in FIG. 3 is a sensor of the type described above as developed by Demas and Bacon.

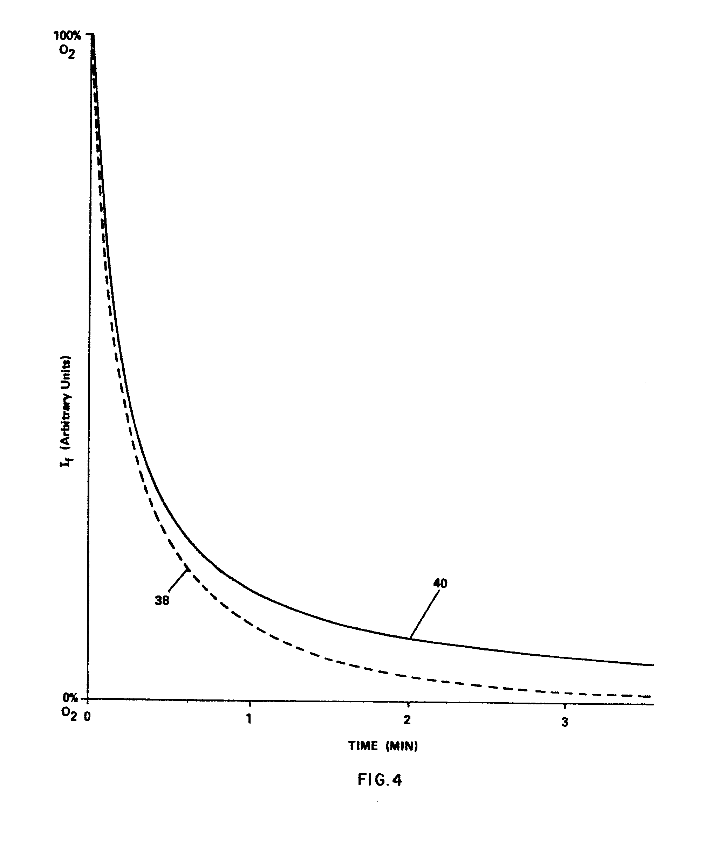

Referring now to FIG. 4, the response time 38 of the device as described herein has proven to be substantially faster than the response time 40 of the prior-art device as described by Demas and Bacon. These response times were monitored for a change in the partial pressure of oxygen from 0 to 760 mm Hg.

In summary, the present invention provides for the rapid, precise and accurate measurement of oxygen partial pressures in remote sensing applications due to the use of a very sensitive fluorescent dye incorporated into the core of an optical fiber. Furthermore, we have described a

**0190830**
D-1463

very simple method for preparing extremely small sensing devices for medical purposes in a manner easy to fabricate.

Although the invention has been described and illustrated in detail, it is to be clearly understood that the same is by way of illustration and example only, and is not to be taken by way of limitation; the spirit and scope of this invention being limited only by the terms of the appended claims.

We Claim:

1.    A device for monitoring oxygen in an environment in response to light transmitted from a light source comprising:

a plastic optical waveguide to receive light transmitted from the light source, said waveguide having a cladding and a core, said cladding surrounding a first portion of said core, said waveguide further including an oxygen-sensing fluorescent medium incorporated in a second portion of said core not surrounded by said cladding wherein said sensing medium fluoresces in response to light from said light source, the intensity of fluorescence of said sensing medium being dependent on the partial pressure of oxygen present in the environment being monitored.

2.    A device for monitoring oxygen as recited in Claim 1, wherein:

said medium incorporated in said second portion of said core includes at least twenty-five percent more plasticizer than the plasticizer present in said plastic waveguide.

3.    A device for monitoring oxygen as recited in Claim 1, wherein:

said oxygen-sensing fluorescent medium includes tris (4,7-diphenyl-1,10-phenanthroline) Ru(II) perchlorate.

4.    A device for monitoring oxygen as recited in Claim 1, wherein:

said oxygen-sensing fluorescent medium includes any oxygen-responsive fluorescent salt of tris (4,7-diphenyl-1,10-phenanthroline) Ru(II) cation.

5.    A device for monitoring oxygen as recited in Claim 2, wherein:

said oxygen-sensing fluorescent medium includes any oxygen-responsive, fluorescent salt of a transition-metal complex having as a ligand a derivative of 1,10-phenanthroline.

6.    A device for monitoring oxygen as recited in Claim 1, wherein:

said oxygen-sensing fluorescent medium includes any oxygen-responsive, fluorescent salt of a transition metal complex having as a ligand 1,10-phenanthroline.

7.    A device for monitoring oxygen as recited in Claim 5, wherein:

said transition-metal complex is selected from the group consisting of ruthenium (II), osmium (II), rhodium (III), and iridium (III).

8.    A device for monitoring oxygen as recited in Claim 1, wherein:

said oxygen-sensing medium is plasticized with a derivative of phthalic acid, said derivative being compatible with said core.

9. A device for monitoring oxygen as recited in Claim 1, wherein:

said oxygen-sensing medium includes a plasticizer selected from the group of materials consisting of phthalic acid derivatives, benzoic acid derivatives, adipic acid derivatives, paraffins, and sebacic acid derivatives.

10. A device for monitoring oxygen as recited in Claim 1, wherein:

said core includes a polymer which can be expanded by the incorporation of a compatible solvent, said polymer being selected from the group consisting of polyvinyl chloride, polyvinyl acetate, and polyvinyl butyral, said solvent being selected from the group consisting of tetrahydrofuran, acetone, and ethanol.

11. A device for monitoring oxygen as recited in Claim 1, wherein:

said oxygen-sensing medium includes a fluorescent dye chosen from the group consisting of pyrene derivatives and perylene derivatives.

12. A device as recited in Claim 1, further comprising:

a sleeve surrounding said waveguide, said sleeve being formed of a gas-permeable, solution-impermeable membrane.

0190830
D-1463

13. A device for monitoring oxygen as recited in Claim 1, further comprising:

a gas-permeable, solution-impermeable membrane about said second portion of said core.

14. A device for monitoring oxygen as recited in Claim 13, wherein:

said membrane is formed of a material selected from the group consisting of polyethylene, polypropylene, and silicone rubber.

15. A method for forming an oxygen sensor comprising the steps of:

first, immersing a portion of an optical fiber having a core surrounded by a cladding in a first solvent to remove said cladding; and

second, immersing said portion of said optical fiber in a first solution consisting of an oxygen-sensing fluorescent dye, a plasticizer compatible with said core, and a second solvent compatible with said fiber to cause said dye and plasticizer to migrate into said core.

16. A method for forming an oxygen sensor as recited in Claim 15, wherein:

said optical fiber is formed of a polyacrylic core and a fluorinated acrylic cladding, and said first solvent is composed of ethyl acetate.

17.  A method for forming an oxygen sensor as recited in Claim 16, wherein: said oxygen sensing fluorescent dye is formed of tris (4,7-diphenyl-1,10-phenanthroline) Ru(II) perchlorate, and said plasticizer is composed of di-isobutyl phthalate, and said second solvent is composed of methylene chloride.

18.  A method for forming an oxygen sensor as recited in Claim 15, wherein: said first immersing step is performed for fifteen to two hundred seconds until said cladding is removed.

19.  A method for forming an oxygen sensor as recited in Claim 15, wherein: said second immersing step is performed for five to thirty seconds to cause said dye and said plasticizer to migrate into said core.

20.  A method for forming an oxygen sensor as recited in Claim 15, wherein: said first solution consists of one volume of a second solution consisting of $10^{-4}$ moles of said dye in one liter of said solvent mixed with one volume of said plasticizer.

21.  A method for forming an oxygen sensor as recited in Claim 20, wherein: said oxygen sensing fluorescent dye is composed of tris (4,7-diphenyl-1,10-phenanthroline) Ru(II) perchlorate, and said plasticizer is formed of di-isobutyl phthalate, and said second solvent is composed of methylene chloride.

22. Any and all features of novelty described, referred to, exemplified, or shown.

10

**FIG.1**

14

20

12   16   32   18

24

26

**FIG.2**

30   28

FIG.3

FIG.4